(19) Europäisches Patentamt
European Patent Office
Office européen des brevets

(11) Numéro de publication: **0 319 365 B1**

(12) **FASCICULE DE BREVET EUROPEEN**

(45) Date de publication de fascicule du brevet: **03.03.93**

(51) Int. Cl.[5]: **C01G 23/047**, C01G 25/02, C01F 17/00

(21) Numéro de dépôt: **88402897.8**

(22) Date de dépôt: **18.11.88**

# (54) Procédé de préparation de granulés à base d'oxydes de titane, de zirconium ou de cérium et produits ainsi obtenus.

(30) Priorité: **30.11.87 FR 8716551**

(43) Date de publication de la demande:
**07.06.89 Bulletin 89/23**

(45) Mention de la délivrance du brevet:
**03.03.93 Bulletin 93/09**

(84) Etats contractants désignés:
**BE DE FR GB NL**

(56) Documents cités:
**EP-A- 0 239 478**
**EP-A- 0 251 752**
**EP-A- 0 275 733**
**EP-A- 0 300 852**
**FR-A- 1 331 039**
**FR-A- 2 527 197**
**FR-A- 2 583 761**

**CHEMICAL ABSTRACTS, vol. 107, no. 6, août 1987, page 154, résumé no. 42523f, Columbus, Ohio, US.**

**WORLD SURFACE COATINGS ABSTRACTS, vol. 57, no. 506, août 1984, page 1203, no. 84/06011, Old Woking, Surrey, GB; L.V. VASILENKO: "Removing titania from pigment production waste".**

**Patent Abstract of Japan, vol. 11, no 30, C-400 & JP-A-61-201 623**

**Zirconia and Zirconia ceramics, R. Stevens, Magnesium Elektron Ltd, July 1986, page 11.**

(73) Titulaire: **RHONE-POULENC CHIMIE**
**25, quai Paul Doumer**
**F-92408 Courbevoie Cédex(FR)**

(72) Inventeur: **Parmentier, François**
**12, rue Pierre Robin**
**F-69007 Lyon(FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

EP 0 319 365 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un procédé de préparation de granulés à base d'oxyde de titane, d'oxyde de zirconium ou d'oxyde de cérium de même que les granulés ainsi obtenus.

Les produits à base des oxydes métalliques mentionnés ci-dessus sont bien connus et ont de nombreuses applications.

Certains de ces produits n'existent pas, à la connaissance de la Demanderesse, sous forme de granulés ou de billes. Or, on sait que la présentation sous forme pulvérulente n'est pas satisfaisante. Elle rend en effet la manipulation de ces produits difficiles notamment à cause du poussiérage qu'elle entraîne.

En ce qui concerne les produits existant déjà sous forme de granulés ou de billes le besoin se fait toujours sentir d'améliorer encore les produits obtenus sur un ou éventuellement plusieurs aspects à la fois. C'est ainsi que l'on cherche à avoir notamment des produits moins fragiles, à plus grande porosité et présentant des tailles moyennes pouvant varier dans une large gamme. Il est aussi intéressant d'avoir des produits qui pour une taille donnée possèdent une répartition granulométrique étroite.

Par ailleurs, dans certains cas, les procédés de préparation des produits sous forme de granulés ou de billes mettent en oeuvre des atomiseurs.

Ces appareils imposent des conditions sur les suspensions à atomiser et notamment sur leur teneur en matière sèche qui ne peut dépasser une certaine valeur maximale. Ils nécessitent aussi un entretien important.

Les procédés par atomisation présentent aussi l'inconvénient de limiter à une certaine gamme de granulométrie les produits obtenus.

Un autre problème s'est donc aussi posé à savoir la simplification et l'amélioration des procédés de préparation.

Un premier objet de l'invention est donc la mise au point de produits présentant des caractéristiques nouvelles ou améliorées.

Un second objet de l'invention est aussi la simplification et l'amélioration des procédés pour l'obtention notamment de ces produits.

Dans ce but le procédé de préparation selon l'invention de granulés à base d'un oxyde minéral du type oxyde de titane, oxyde de zirconium ou oxyde de cérium est caractérisé en ce qu'il comporte les étapes suivantes :

- on met en présence et on mélange une suspension ou un sol dudit oxyde, au moins un hydrophobant et au moins un solvant organique peu ou non miscible à l'eau, ce par quoi on obtient une phase liquide substantiellement exempte dudit oxyde et des granulés à base dudit oxyde ;
- on sépare la phase liquide précitée des granulés ;
- éventuellement on lave, on sèche et on calcine lesdits granulés.

L'invention concerne aussi des granulés susceptibles notamment d'être préparés par le procédé ci-dessus, à base d'un oxyde métallique, caractérisés en ce qu'ils sont poreux, qu'ils ont un volume spécifique d'au moins 0,1 cm3/g, qu'ils présentent de préférence une forme sensiblement sphérique et en ce que l'oxyde métallique est choisi dans le groupe comprenant l'oxyde de titane, l'oxyde de zirconium et l'oxyde de cérium.

D'autres caractéristiques et avantages de l'invention seront mieux compris à la lecture de la description et des exemples concrets mais non limitatifs qui vont suivre.

Le procédé de l'invention consiste essentiellement à mettre en présence et à mélanger une suspension ou un sol d'un oxyde, un hydrophobant et un solvant organique. La Demanderesse a découvert qu'en opérant dans certaines conditions on pouvait obtenir une granulation. Ces différentes conditions vont maintenant être étudiées en détail.

### Suspension ou sol de départ

Le procédé de l'invention part d'une suspension ou d'un sol généralement en milieu aqueux d'un oxyde du type mentionné plus haut. Cette suspension ou ce sol peuvent être obtenus d'une manière quelconque.

Il y a lieu de noter ici, et ceci est valable pour toute la description, que le terme oxyde doit être pris au sens large, notamment comme s'appliquant en outre aux oxydes hydratés ou aux hydroxydes susceptibles d'être obtenus par les procédés qui vont être rappelés ci-dessous à titre d'exemples étant bien entendu que ces procédés ne font pas partie de l'invention.

Il faut aussi prendre en compte que la suspension d'oxyde de départ peut être soit une suspension obtenue directement par action d'un réactif sur un précurseur de l'oxyde considéré soit une suspension obtenue par mise en dispersion dans l'eau d'un oxyde pulvérulent préalablement préparé, éventuellement

séché et calciné.

Les suspensions aqueuses d'oxyde de titane peuvent être obtenues notamment à partir du procédé classique de l'attaque sulfurique de l'ilménite après l'étape d'hydrolyse et de filtration.

Elles peuvent également provenir de l'hydrolyse des composés de titane de formule $TiCl_{4-n}(OR)_n$ dans laquelle "n" est compris entre 0 et 4 et R est un radical alkyl de préférence choisi parmi les suivants : méthyle, éthyle, isopropyle, butyle, hexyle et stéaryle.

Pour l'oxyde de zirconium, on peut mentionner notamment les procédés par précipitation. On peut citer dans ce cas une préparation par précipitation par addition d'un composé basique par exemple l'ammoniaque à une solution d'un précurseur acide du zirconium par exemple un nitrate, chlorure ou sulfate de zirconium.

On peut citer, en outre, comme autres modes préparatoires de l'oxyde de zirconium, les procédés par calcination, notamment, la calcination directe d'un précurseur du type précité par exemple dans une flamme.

On peut enfin mentionner comme procédé d'obtention de cet oxyde la préparation par passage par un sol obtenu par hydrolyse à chaud d'une solution d'un précurseur du type précité.

Quant à l'oxyde cérique, celui-ci peut être préparé en particulier par chauffage à l'air entre 400 ° C et 1000 ° C de l'hydroxyde cérique ou de certains sels oxygénés tels que nitrates, sulfates, carbonates, oxalates, acétates.

On peut citer aussi des procédés par précipitation tels que ceux mettant en oeuvre une hydrolyse d'un sel de cérium en milieu acide (Brevet français N° 2.559.754) ou une réaction entre une solution aqueuse d'un sel de cérium et une solution contenant des ions sulfate (Brevet français N° 2.559.755).

Hydrophobant

Le procédé de l'invention met aussi en oeuvre un hydrophobant.

Cet hydrophobant peut être un hydrophobant anionique, cationique ou amphotère.

Les hydrophobants cationiques ou amphotères convenant aux procédés de l'invention pourront être choisis notamment dans le groupe comprenant les amines primaires, secondaires, tertiaires ou leurs sels, les sels d'ammonium quaternaire, les amino-acides, ou leurs sels.

En ce qui concerne les amines on peut tour d'abord utiliser les amines légères. On entend par là les amines dont le nombre d'atomes de carbone de leur chaîne hydrocarbonée est au plus égal à 6. On emploie plus particulièrement les amines en $C_4$-$C_6$.

On utilise aussi de préférence les amines aliphatiques.

A titre d'exemple, on peut citer la n-butylamine, la cyclohexylamine, l'hexylamine.

On peut ainsi utiliser les amines grasses. Pour fixer les idées, on peut entendre par là les amines dont les substituants sont des chaînes carbonées présentant un nombre d'atomes de carbone supérieur à 6 et plus particulièrement supérieur ou égal à 10.

Dans le cadre des amines tertiaires, on peut citer les dimethylalkyl amines grasses de formule $RN(CH_3)_2$ R étant notamment un radical en $C_8$-$C_{22}$ en particulier $C_8$-$C_{18}$, et par exemple un radical correspondant à la chaine carbonée des acides gras de suif, de coprah, d'acide oléique, hydrogènés ou non.

Dans ce même groupe on peut aussi citer les dialkylmethyl amines grasses de formule $R_2NCH_3$ le radical R étant défini comme dans le paragraphe précédent.

Toujours dans le même groupe conviennent aussi les trialkyl amines grasses de formule $R_3N$, R étant défini comme précédemment.

Comme sels d'amines primaires, secondaires ou tertiaires on peut utiliser les acétates.

Par ailleurs, on pourra utiliser les sels d'ammonium quaternaire de formule (1)

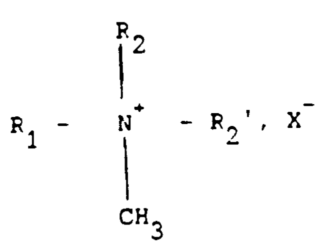

$R_1$ étant un radical alkyle ou alcényle avec de préférence un nombre d'atomes de carbone égal ou supérieur à 6 et plus particulièrement égal ou supérieur à 10, $R_2$ et $R_2'$ étant des radicaux alkyle, alkyle-oxy ou alkyl-phenyle identiques ou différents, X étant un anion.

Parmi ces sels on utilise principalement les chlorures et les sulfates.

On peut citer comme hydrophobants de cette catégorie qui conviennent bien celui dans lequel $R_1$ est le radical coprah, $R_2$ est le radical benzyle, $R'_2$ le radical methyl, l'anion étant le chlore, produit commercialisé sous la marque NORAMIUM DA 50, et celui dans lequel $R_1$ est le radical correspondant à la chaine carbonée de l'acide gras de suif, $R_2$ et $R'_2$ sont identiques et représentent le methyl, produit commercialisé sous la marque NORAMIUM MS80.

Il est aussi possible d'utiliser des diamines sans sortir du cadre de l'invention.

On peut mentionner les diamines de formule $RNH-(CH_2)_3-NH_2$ dans laquelle R est tel que défini précedemment.

Il est aussi possible d'utiliser des diammoniums quaternaires de formule (2) :

$$R_3\ R_4\ R_5\ N^+ - (CH_2)_n - N^+R_6R_7R_8,\ 2X^-$$

$R_3$ étant un radical alkyle ou alcenyle avec un nombre d'atomes de carbone égal ou supérieure à 8 ;

$R_4$ $R_5$ $R_6$ $R_7$ et $R_8$ étant l'hydrogène ou des radicaux alkyles,

$R_4$ $R_5$ $R_6$ ou $R_7$ pouvant être identiques ou différents ; n étant un nombre compris entre 1 et 3,

X étant un anion.

Un exemple de ce type de produit est celui dans lequel n = 3, $R_4 = R_5 = R_6 = R_7 = R_8 = CH_3$, X est le chlore, produit commercialisé sous la marque DUOQUAD.

On peut aussi citer les sels de diamines de formule (3) :

$$[R_3\ R_4\ R_5\ N-(CH_2)_n- NR_6R_7R_9]^{2+}(R_{10}COO)_2^{2-}$$

$R_3$, $R_4$, $R_5$, $R_6$, $R_7$ et n étant tels que précédemment définis, $R_9$ étant l'hydrogène ou un radical alkyle, $R_{10}$ étant un radical alkyle, avec un nombre d'atomes de carbone égal ou supérieur à 8.

On peut citer comme exemple les dioléates de diamine.

On peut aussi utiliser avantageusement les amino-acides de formule (4) ou (5)

(4) 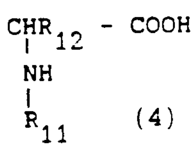 (4) ou 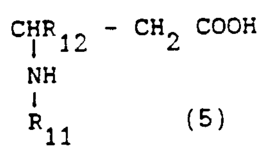 (5)

$R_{11}$, $R_{12}$ étant l'hydrogène ou un radical alkyl, avec comme conditions que $R_{11}$ et $R_{12}$ ne soient pas simultanément l'hydrogène.

On peut citer notamment dans ce cas la lauryl bétaine ($R_{11} = C_{12}$, $R_{12} = H$) vendue sous la marque ARMOTERIC LB.

Comme autres composés interéssants pour la mise en oeuvre du procédé de l'invention on peut mentionner ceux de formule (6)

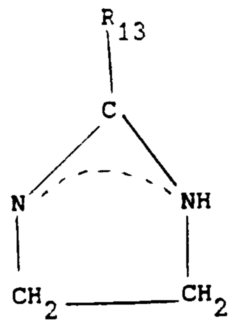

dans laquelle $R_{13}$ est un radical alkyle en $C_8$-$C_{22}$ en particulier $C_8$-$C_{18}$ et par exemple correspondant à la chaine carbonée des acides gras de suif, de coprah, de l'acide oléique, hydrogènés ou non, ou des sels

des dérivés de formule (7)

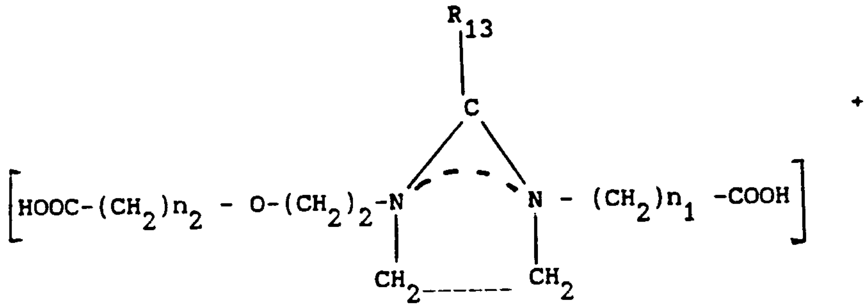

dans laquelle $n_1$ et $n_2$ sont des nombres entiers identiques ou différents pouvant varier entre 1 et 4.

On pourra citer plus particulièrement les produits commercialisés sous les marques suivantes.

SOCHAMINE A 7525

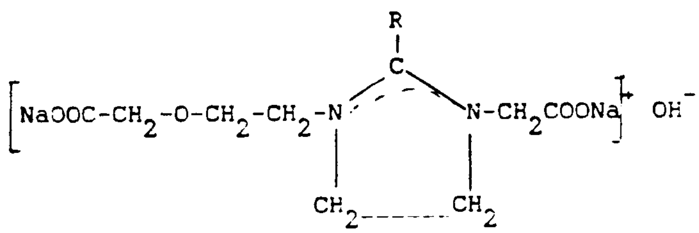

SOCHAMINE A 7527

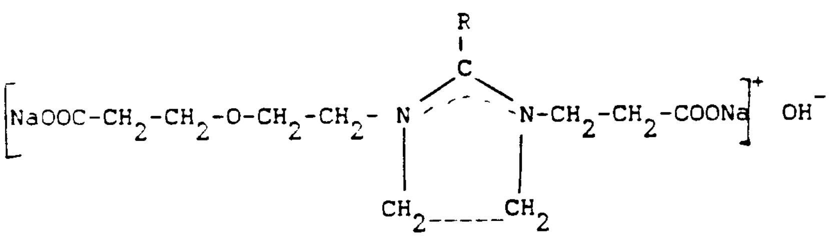

SOCHAMINE AC 721

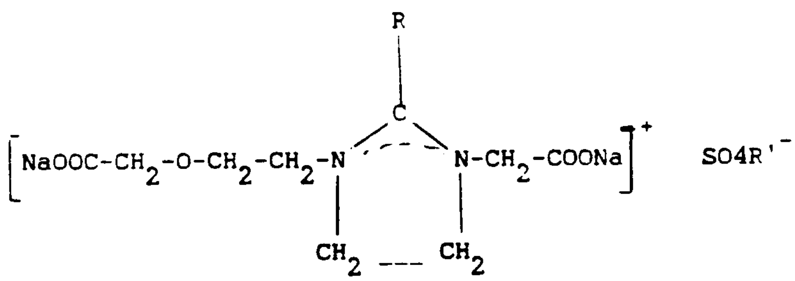

R' = chaine alkyle en C12-C14.

R désignant le radical coprah

On peut enfin citer des dérivés pyridinium de formule (8). $(R_{14}\text{-}\ C_5H_4\ NR_{15})^+\ X^-$, X étant un halogène, notamment le chlore, $R_{14}$ étant un radical correspondant à la chaine carbonée d'un acide gras, notamment un radical en $C_{16}$,

$R_{15}$ étant un alkyl, plus particulièrement $CH_3$.

Comme exemples d'hydrophobants anioniques utilisables, on peut citer :

- les savons de métaux alcalins tels que les sels sodiques ou potassiques d'acides gras saturés ou insaturés ayant de 8 à 24 atomes de carbone ou des dérivés d'acides aminocarboxyliques comme le N-lauryl sarconisate de sodium, le N-acylsarconisate de sodium.

- les sulfonates alcalins tels que les alcoylsulfonates, les arylsulfonates ou les alcoylarylsulfonates ; en particulier les alcoylbenzènesulfonates de formule $R_1$-$C_6H_4$ $SO_3$ $M_1$ dans laquelle le radical $R_1$ est un radical alcoyle linéaire ou ramifié contenant de 8 à 13 atomes de carbone tel que par exemple un radical nonyle, dodécyle, tridécyle et $M_1$ représente un atome de sodium, de potassium, un radical ammonium, de la diéthanolamine ou de la triéthanolamine ; les alcoylnaphtalènesulfonates tels que le nonylnaphtalènesulfonate de sodium. D'autres sulfonates peuvent être employés tels que les N-acyl, N-alcoyltaurates de formule $R_2$-CO-N($R'_2$)-$CH_2$-$CH_2$-$SO_3$Na où $R_2$ est un radical alcoyle ayant de 11 à 18 atomes de carbone et $R'_2$ est un radical méthyle, éthyle : comme par exemple le N-oléoyl, N-méthyltaurate ou le N-palmitol, N-méthyltaurate de sodium.
- les esters béta-sulfoéthyliques des acides gras par exemple des acides laurique, myristique, stéarique : les oléfino-sulfonates contenant de 12 à 24 atomes de carbone, obtenus par sulfonation à l'aide d'anhydride sulfurique d'alpha-oléfine comme le dodécène -1, la tétradécène-1, l'hexadécène-1, l'octadécène-1, l'eicosène-1, le tétracosène-1
- les sulfates et les produits sulfatés : parmi les sulfates d'alcoyle répondant à la formule $R_3OSO_3$ $M_1$, on peut citer ceux où le radical $R_3$ est un radical lauryle, cétyle, myristyle et $M_1$ ayant la signification donnée précédemment : les huiles et graisses naturellement sulfatées ; le sel disodique de l'acide oléique sulfaté ; les alcools gras polyoxyéthylénés et sulfatés de formule $R_4$ - (O - $CH_2$ - $CH_2$)$_{n1}$-$OSO_3$ $M_1$ dans laquelle le radical $R_4$ est un radical alcoyle contenant de 6 à 16 atomes de carbone tel que par exemple un radical myristyle ou un radical alcoyle linéaire ou ramifié comme par exemple un radical hexyle, octyle, décyle, dodécyle, $n_1$ est le nombre de moles d'oxyde d'éthylène pouvant varier de 1 à 4 et $M_1$ ayant la signification donnée précédemment ; les alcoylphénols polyoxyéthylénés et sulfatés de formule $R_5$ - $C_6H_4$ - (O - $CH_2$)$_{n2}$ $OSO_3$ $M_1$ dans laquelle le radical $R_5$ est un radical alcoyle linéaire ou ramifié contenant de 8 à 13 atomes de carbone tel que par exemple un radical octyle, nonyle, dodécyle, $n_2$est le nombre de moles d'oxyde d'éthylène pouvant varier de 1 à 6 et $M_1$ ayant la signification donnée précédemment.
- les esters primaires et secondaires de l'acide orthophosphorique ou l'un de ses sels qui peuvent être représentés pour les phosphates d'alcoyle par la formule ($R_6$O) PO ($OM_2$)$_2$ et pour les phosphates de dialcoyle par la formule ($R_6$O)$_2$ PO ($OM_2$) dans lesquelles le radical $R_6$ est un radical alcoyle linéaire ou ramifié contenant de 6 à 12 atomes de carbone et $M_2$ représente un atome d'hydrogene, de sodium ou de potassium. A titre d'exemples de radical $R_6$, on peut citer le n-hexyle, n-octyle, n-ethylhexyle, diméthylhexyle, n-décyle, diméthyloctyle, triméthylheptyle, triméthylnonyle.
- les mono- ou diesters de l'acide orthophosphorique ou l'un de ses sels, polyoxyéthylénés qui peuvent être représentés pour les phosphates d'alcoyle polyoxyéthylénés par la formule

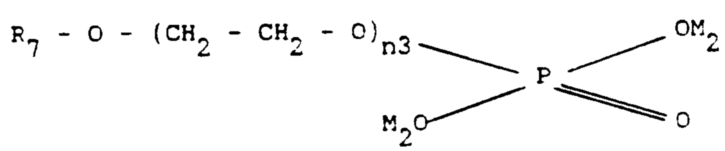

et pour les phosphates de dialcoyle polyoxyéthylénes par la formule

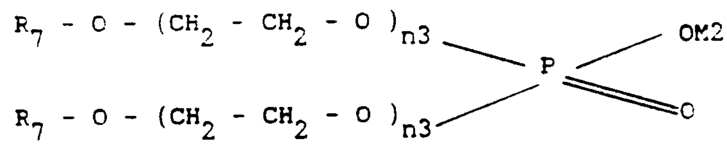

dans lesquelles le radical $R_7$ représente un radical alcoyle linéaire ou ramifié ayant de 6 à 12 atomes de carbone, un radical phényle, un radical alcoylphényle avec une chaine alcoyle ayant de 8 à 12 atomes de carbone, $n_3$ est le nombre d'oxyde d'éthylène pouvant varier de 2 à 8 et $M_2$ ayant la signification donnée précédemment. Comme exemples de radical $R_7$, on peut nommer le radical hexyle, octyle, décyle, dodécyle, nonylphényle.

## Solvant

Enfin le procédé de l'invention utilise un solvant organique peu ou pas miscible à l'eau.Il va de soi que le solvant doit être compatible avec l'hydrophobant utilisé.

Ce solvant pourra être choisi dans le groupe comprenant les esters, les éthers et les cétones et de préférence les dérivés aliphatiques de ceux-ci.

En ce qui concerne les esters aliphatiques on peut utiliser en particulier les formiates, les acétates, les propionates, les butyrates, les oxalates, les phosphates et lactates.

On préfère les acétates, notamment les acétates d'éthyle, d'isopropyle et de butyle.

Parmi les éthers on citera notamment l'éther diisopropylique.

Les cétones aliphatiques peuvent être avantageusement choisies pour la mise en oeuvre du procédé de l'invention. On pourra citer tout particulièrement la méthyl-isobutyl cétone, l'éthyl-isopropyl cétone.

Comme autres types de solvants utilisables figurent les solvants aromatiques ou hydrocarbures benzéniques.

On peut utiliser tout particulièrement le xylène et le toluène. Les dérivés halogénes et notamment chlorés de ces solvants peuvent aussi être employés par exemple le chlorobenzene.

Par ailleurs, un autre type de solvants utilisables est celui des carbures aliphatiques halogènés ou hydrocarbures alicycliques halogènés.

On peut citer les carbures aliphatiques ou alicycliques halogènés à chaînes courtes en $C_1$-$C_4$. Ils correspondent aux produits vendus sous la marque FLUGENE.

On peut citer notamment le trichlorotrifluoroéthane, le dichlorotetrafluoréthane.

On peut mentionner comme solvants envisageables les carbures éthyléniques halogènés.

On pourra citer particulièrement dans ce cas le dichloréthylène, le trichloréthylène et le tétrachloréthylène.

Tous les solvants décrits ci-dessus peuvent bien entendu être utilisés seuls ou en combinaison.

La quantité d'hydrophobant à utiliser varie en fonction du type d'oxyde présent dans la suspension ou le sol de départ et notamment en fonction de sa surface (surface BET). Cette quantité est d'autant plus grande que cette surface est importante. Généralement elle est comprise entre 0,1 % et 100 % plus précisément 0,5 - 40 % en poids par rapport au poids d'oxyde exprimé en matière sèche, c'est-à-dire par rapport à la quantité d'oxyde dans la suspension ou le sol.

Toutefois, dans le cas des amines légères miscibles à l'eau, les quantités utilisées pourront éventuellement être supérieures à celles mentionnées plus haut.

La quantité maximale d'hydrophobant n'est pas en soi critique. On peut dire à titre d'exemple qu'en pratique elle est d'au plus 200 %.

La quantité de solvant est aussi fonction du type d'oxyde de la même manière que décrite plus haut pour l'hydrophobant. Cette quantité est généralement telle que le rapport volume de solvant exprimé en litre/poids d'oxyde en kg (toujours calculé par rapport à l'oxyde présent dans la suspension ou le sol) varie entre 0,1 et 5, de préférence 0,2 et 1,5.

En fait les quantités de solvant et d'hydrophobant sont liées et dépendent aussi de la nature de l'hydrophobant. Pour une quantité d'hydrophobant fixée, il existe une quantité minimale de solvant en deçà de laquelle il n'y a pas agglomération de l'oxyde. Il existe aussi une quantité maximale au delà de laquelle il y a collage des granulés formés et obtention d'une masse compacte d'oxyde.

Généralement, ces quantités minimales et maximales sont situées dans les fourchettes de valeur indiquées plus haut.

La mise en présence de la suspension ou du sol, et de l'hydrophobant et du solvant peut se faire du plusieurs manières.

Selon une première manière on mélange dans un premier temps la suspension ou le sol d'oxyde avec le solvant et on introduit dans un deuxième temps l'hydrophobant dans le mélange ainsi obtenu .

Selon une seconde manière, on mélange dans un premier temps la suspension d'oxyde et l'hydrophobant et, dans un deuxième temps, on ajoute le solvant au mélange ainsi obtenu.

Selon une troisième manière préférentielle dans le cas d'hydrophobants peu solubles dans l'eau, par exemple les amines grasses, on peut mélanger préalablement le solvant et l'hydrophobant et mettre en présence ce mélange avec la suspension ou le sol d'oxyde.

La mise en présence de la suspension ou du sol, de l'hydrophobant et du solvant se fait sous agitation. On pourra utiliser tout type d'agitation, en particulier un agiteur du type à turbine.

La granulométrie des produits obtenus varie généralement en fonction de la puissance de l'agitation. La granulométrie est d'autant plus fine que la puissance d'agitation est élevée.

La température à laquelle se fait le mélange n'est en principe pas critique. Elle pourra varier généralement entre la température ambiante et 80 ° C.

Toutefois, en ce qui concerne la température, les amines légères miscibles à l'eau constituent un cas particulier. En effet, on s'est aperçu que cette température doit être de préférence d'autant plus élevée que le nombre d'atomes de carbone de l'amine utilisée est faible.

Pour les amines en $C_4$ ou moins, cette température sera, généralement d'au moins 50°C et plus particulièrement d'au moins 80°C.

Pour les amines $C_5$ -$C_6$, cette température est aussi fonction du solvant et de leur solubilité dans l'eau. Généralement, cette température est d'autant plus élevée que cette solubilité est grande.

On notera enfin que l'utilisation d'un hydrophobant du type cationique ou anionique dépendra entre autres variables, pour un oxyde donné du pH de la suspension ou du sol aqueux de départ. De préférence pour un hydrophobant cationique, on se placera dans des conditions telles que le pH du mélange suspension ou sol, hydrophobant, solvant au moment de la granulation soit supérieur au pH correspondant au point isoélectrique de l'oxyde de la suspension ou du sol. A l'inverse pour un hydrophobant anionique, on se placera à un pH tel que défini plus haut inférieur au pH correspondant au point isoélectrique.

Une fois l'agitation du milieu réactionnel terminée, on obtient des granulés d'oxyde minéral et une phase liquide qui est généralement une phase aqueuse.

Une deuxième étape consiste à séparer les granulés et la phase liquide obtenus. Cette séparation peut se faire par tout moyen connu, par exemple filtre à bande ou centrifugeuse.

Cette séparation se fait facilement. Il s'agit là d'un des avantages du procédé de l'invention.

Les granulés ainsi obtenus peuvent être lavés si nécessaire. Ce lavage peut se faire avec de l'eau ou de l'eau saturée en solvant.

Outre le lavage, les granulés de l'invention peuvent être éventuellement séchés et/ou, si nécessaire calcinés. Ce séchage et cette calcination peuvent être réalisés selon tout moyen connu.

L'invention concerne aussi les granulés susceptibles d'être obtenus par le procédé qui vient d'être décrit.

Comme cela a été indiqué plus haut, le produit selon l'invention se caractérise essentiellement par sa structure. Il se présente préférentiellement sous forme de granulés sensiblement sphériques. Ces granulés sont en outre poreux. Le produit de l'invention présente ainsi un volume spécifique d'au moins 0,1 cm3/g plus particulièrement d'au moins 0,3 cm3/g et notamment compris entre 0,5 et 2 cm3/g.

Les volumes spécifiques sont déterminés selon la norme ASTM D4284-83. Les porosités données reflètent les porosités intra-granulés.

La granulométrie peut varier dans de larges limites.

Les granulés peuvent ainsi présenter une taille moyenne d'au moins 50 µm, notamment d'au moins 200 µm.

Selon un mode de réalisation particulier on peut avoir des granulés de taille moyenne d'au moins 0,5 mm, notamment comprise entre 0,5 et 2 mm et d'une manière plus générale comprise entre 0,5 et 20 mm.

Par ailleurs, les granulés de l'invention peuvent présenter une densité apparente tassée selon la norme AFNOR N° 030100 d'au moins 0,2, notamment comprise entre 0,5 et 2.

Les granulés de l'invention peuvent enfin contenir une certaine quantité d'hydrophobant, par exemple entre 0,1 et 30 % en poids ce qui peut être utile pour certaines applications.

Les granulés ainsi obtenus se prêtent à toutes les applications connues de l'oxyde d'aluminium, par exemple, ils peuvent être utilisés comme charge, liant, agent absorbant, catalyseur, support de catalyseur.

Des exemples concrets mais non limitatifs de l'invention vont maintenant être donnés.

## EXEMPLE 1

Un milieu contenant 700 g d'eau permutée et en suspension 100 g de $TiO_2$ AT 1ND commercialisé par la Société Thann et Mulhouse est mis sous agitation dans un réacteur de 1 l équipé de 4 contre-pales, par une turbine Rushton de 50 mm de diamètre tournant à 800 tr/mn.

Le pH de la suspension est de 7,3.

Dans ce milieu, on ajoute en 10 minutes 24 g d'un mélange 95/5 en poids de cyclohexane et d'hexylamine.

Après 30 minutes d'agitation, le milieu obtenu est filtré sur buchner et séché à l'étuve sous azote 12 h à 100°C.

Le produit $TiO_2$ est obtenu granulé, avec une taille moyenne de 340 µm et une densité apparente tassée de 0,96.

## EXEMPLE 2

Un milieu contenant 700 g d'eau permutée et 100 g de $TiO_2$ AT 1ND en suspension est mis sous agitation comme précédemment.

Le pH de la suspension est de 7,3.

On introduit rapidement dans ce milieu 40 g de méthylisobutylcétone, puis progressivement en 10 minutes 24 g d'une solution aqueuse à 50 % d'extrait sec de Noramium DA 50.

Le milieu est agité 30 minutes, filtré sur buchner et séché à l'étuve sous azote 12 h à 100 ° C.

Le produit $TiO_2$ est obtenu granulé, avec un diamètre moyen de 340 µm et une densité apparente tassée de 0,96.

EXEMPLE 3

770 g d'un sol de $ZrO_2$ à 9 % d'oxyde et 91 % d'eau, issu d'une opération d'hydrolyse de $ZrOCl_2$ et d'une granulométrie moyenne de 0,25 µm, est mis sous agitation comme précédemment.

Le pH du sol est de 7,9.

On introduit progressivement dans ce milieu, en 10 minutes, 41 g d'un mélange de cyclohexane et n-heptylamine 5O/50 en poids.

Après 30 minutes d'agitation, le milieu est filtré sur buchner et le solide séché à l'étuve sous azote 12 heures à 100 ° C.

Le produit $ZrO_2$ est obtenu granulé, avec une taille moyenne de 550 µm et une densité apparente tassée de 0,93.

EXEMPLE 4

On utilise le sol de l'exemple 3 dans les mêmes conditions opératoires.

Le pH du sol est amené à 12 par ajout d'une solution de soude à 10 % dans l'eau.

On introduit rapidement dans ce milieu 54 g de MIBK (methylisobutylcétone).

On ajoute progressivement, en 10 minutes 14 g d'une solution de Noramium DA 50 dans l'eau permutée, à 10 % d'extrait sec.

Après 30 minutes d'agitation, le milieu est filtré sur buchner et séché à l'étuve sous azote 12 h à 100 ° C.

Le produit $ZrO_2$ et obtenu granulé avec une taille moyenne de 550 µm et une densité apparente tassée de 0,91.

EXEMPLE 5

On utilise le sol de l'exemple 3 dans les mêmes conditions opératoires.

Le pH du sol est de 7,9.

On introduit rapidement dans ce milieu 54 g de méthylisobutylcétone.

On ajoute progressivement, en 10 minutes 14 g d'une solution de dodécylsulfate de sodium JANSSEN, réf. 23 042 53, à 10 % d'extrait sec, dans de l'eau permutée.

Après 30 minutes d'agitation, le milieu est filtré sur buchner et séché à l'étuve sous azote 12 h à 100 ° C.

Le produit $ZrO_2$ est obtenu granulé, avec une taille moyenne de 550 µm et une densité apparente tassée de 0,93.

EXEMPLE 6

Un milieu contenant 700 g d'eau et 70 g de $CeO_2$ 99,5 % pulvérulent (commercialisé par la Société A.M.P.E.R.E.) est mis sous agitation comme précédemment.

Le pH de la suspension est de 6,5.

On introduit progressivement dans ce milieu, en 10 minutes, 19 g d'un mélange de cyclohexane et de n-hexylamine 50/50 en poids.

Après 30 minutes d'agitation, le milieu est filtré sur buchner et séché à l'étuve sous azote 12 h à 100 ° C.

Le produit $CeO_2$ est obtenu granulé, avec une taille moyenne de 300 µm et une densité apparente tassée de 1,05.

EXEMPLE 7

On utilise le même produit de départ dans les mêmes conditions opératoires que dans l'exemple 6.

Le pH de la suspension est amené à 12 par ajout d'une solution de soude à 10 % dans l'eau.

On introduit rapidement dans ce milieu 19 g de méthylisobutylcétone.

On ajoute progressivement, en 10 minutes, 7 g d'une solution de Noramium DA 50 dans l'eau permutée, à 10 % d'extrait sec.

Après 30 minutes d'agitation puis filtration et séchage comme dans l'exemple 6 on obtient un granulé de taille moyenne et de densité identiques à celles du granulé de l'exemple 6.

EXEMPLE 8

On utilise le même produit de départ dans les mêmes conditions opératoires qu'à l'exemple 6.

Le pH de la suspension est de 6,5.

On introduit rapidement dans ce milieu 19 g de méthylisobutylcétone.

On ajoute progressivement, en 10 minutes, 7 g d'une solution de dodécylsulfate de sodium JANSSEN, réf. 23 042 53, à 10 % d'extrait sec, dans de l'eau permutée.

Après 30 minutes d'agitation puis filtration et séchage comme dans l'exemple 6 on obtient un granulé de taille moyenne et de densité identiques à celles du granulé de l'exemple 6.

Bien entendu, l'invention n'est nullement limitée aux modes de réalisation décrits qui n'ont été donnés qu'à titre d'exemples.

**Revendications**

**1.** Procédé de préparation de granulés à base d'un oxyde minéral du type oxyde de titane, oxyde de zirconium ou oxyde de cérium, caractérisé en ce qu'il comporte les étapes suivantes :
   - on met en présence et on mélange sous agitation une suspension aqueuse ou un sol aqueux dudit oxyde, au moins un hydrophobant et au moins un solvant organique peu ou non miscible à l'eau, ce par quoi on obtient une phase liquide substantiellement exempte dudit oxyde et des granulés à base dudit oxyde ;
   - on sépare la phase liquide précitée des granulés ;
   - éventuellement on lave, on sèche et on calcine lesdits granulés.

**2.** Procédé selon la revendication 1, caractérisé en ce qu'on utilise un hydrophobant cationique ou amphotère.

**3.** Procédé selon l'une des revendications 1 ou 2, caractérisé en ce qu'on utilise au moins un hydrophobant choisi dans le groupe comprenant les amines primaires, secondaires, tertiaires ou leurs sels, les sels d'ammoniums quaternaires, les amino-acides ou leurs sels.

**4.** Procédé selon la revendication 3, caractérisé en ce qu'on utilise au moins un hydrophobant choisi dans le groupe des amines à nombres d'atomes de carbone au plus égal à 6.

**5.** Procédé selon la revendication 3 ou 4, caractérisé en ce qu'on utilise une amine aliphatique.

**6.** Procédé selon la revendication 3, caractérisé en ce qu'on utilise des amines grasses.

**7.** Procédé selon la revendication 3 ou 6, caractérisé en ce qu'on utilise les acétates comme sels d'amines primaires, secondaires ou tertiaires.

**8.** Procédé selon l'une quelconque des revendications 3 à 7 caractérisé en ce qu'on utilise une diamine à titre d'hydrophobant.

**9.** Procédé selon la revendication 8 caractérisé en ce qu'on utilise une diamine de formule $RNH\text{-}(CH_2)_3\text{-}NH_2$, R étant un radical en $C_8$-$C_{22}$.

**10.** Procédé selon la revendication 3 caractérisé en ce qu'on utilise un sel d'ammonium quaternaire de formule (1)

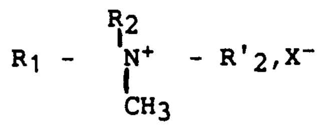

$R_1$ étant un radical alkyle ou alcényle avec de préférence un nombre d'atomes de carbone égal ou supérieur à 6, $R_2$ et $R'_2$ étant des radicaux alkyle, alkyle-oxy ou alkyl-phényle identiques ou différents, X étant un anion.

**11.** Procédé selon la revendication 3 caractérisé en ce qu'on utilise des diammoniums quaternaires de formule (2) :

$R_3\ R_4\ R_5\ N^+ - (CH_2)_n - N^+ R_6 R_7 R_8, 2X^-$

$R_3$ étant un radical alkyle ou alcényle avec un nombre d'atomes de carbone égal ou supérieur à 8 ;
$R_4$ $R_5$ $R_6$ $R_7$ et $R_8$ étant l'hydrogène ou des radicaux alkyles,
$R_4$ $R_5$ $R_6$ ou $R_7$ pouvant être identiques ou différents ;
n étant un nombre compris entre 1 et 3.
X étant un anion.

**12.** Procédé selon la revendication 8 caractérisé en ce qu'on utilise les sels de diamines de formule (3) :

$[R_3\ R_4\ R_5\ N\text{-}(CH_2)_n - NR_6\ R_7\ R_9]^{2^+}\ (R_{10}\ COO)_2\ ^{2-}$

$R_3$, $R_4$, $R_5$, $R_6$, $R_7$ et n étant tels que précédemment définis, $R_9$ étant l'hydrogène ou un radical alkyle, $R_{10}$ étant un radical alkyle, avec un nombre d'atomes de carbone égal ou supérieur à 8.

**13.** Procédé selon la revendication 3 caractérisé en ce qu'on utilise les amino-acides ou leurs sels de formule (4) ou (5) :

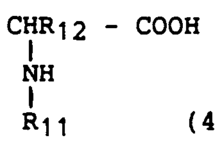 (4) ou 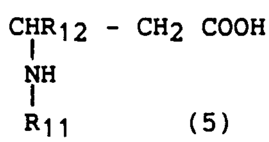 (5)

$R_{11}$,$R_{12}$ étant l'hydrogène ou un radical alkyl, $R_{11}$ et $R_{12}$ n'étant pas simultanément l'hydrogène.

**14.** Procédé selon l'une des revendications 1 à 3 caractérisé en ce qu'on utilise comme hydrophobant des composés de formule (6):

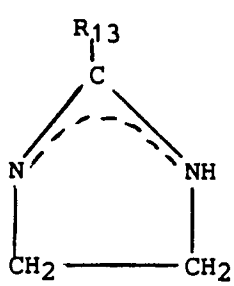

dans laquelle $R_{13}$ est un radical alkyl en $C_8$ - $C_{22}$, ou des sels des dérivés de formule (7) :

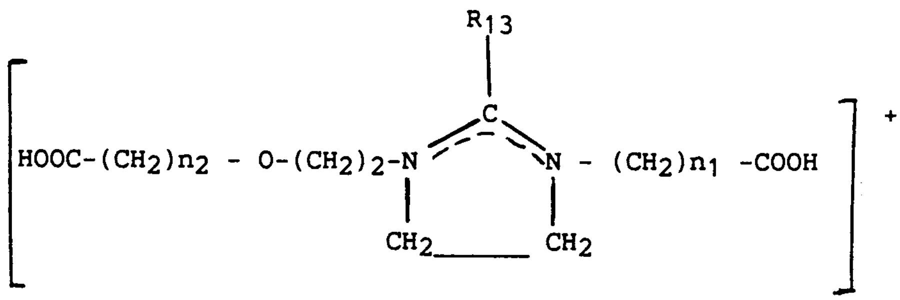

dans laquelle $n_1$ et $n_2$ sont des nombres entiers identiques ou différents pouvant être compris entre 1 et 4.

**15.** Procédé selon l'une des revendications 1 à 3 caractérisé en ce qu'on utilise comme hydrophobant des composés de formule (8) :

$(R_{14} - C_5H_4 - NR_{15})^+, X^-$

X étant un halogène, notamment le chlore, $R_{14}$ étant un radical correspondant à la chaîne carbonée d'un acide gras, $R_{15}$ étant un radical alkyl.

**16.** Procédé selon la revendication 1, caractérisé en ce qu'on utilise un hydrophobant anionique.

**17.** Procédé selon la revendication 16 caractérisé en ce qu'on utilise un hydrophobant choisi dans le groupe comprenant les savons de métaux alcalins, les sulfonates alcalins, les esters béta-sulfoéthyliques des acides gras, les sulfates et produits sulfatés, les esters de l'acice orthophosphorique ou l'un de ces sels.

**18.** Procédé selon l'une quelconque des revendications 1 à 17, caractérisé en ce qu'on utilise un solvant choisi dans le groupe comprenant les esters, les éthers et les cétones.

**19.** Procédé selon la revendication 18 caractérisé en ce qu'on utilise comme solvant un ester acétique.

**20.** Procédé selon l'une quelconque des revendications 1 à 17 caractérisé en ce qu'on utilise un solvant choisi dans le groupe des hydrocarbures benzéniques.

**21.** Procédé selon la revendication 20 caractérisé en ce qu'on utilise comme solvant le toluène ou le xylène.

**22.** Procédé selon l'une quelconque des revendications 1 à 17 caractérisé en ce que l'on utilise un solvant choisi dans le groupe des hydrocarbures aliphatiques halogénés ou des hydrocarbures alicycliques halogénés.

**23.** Procédé selon la revendication 22, caractérisé en ce qu'on utilise au moins un solvant choisi dans le groupe des carbures éthyléniques halogénés.

**24.** Procédé selon la revendication 21 ou 22 caractérisé en ce que les carbures aliphatiques et les hydrocarbures alicycliques précités sont en $C_1$ - $C_4$.

**25.** Procédé selon la revendication 24 caractérisé en ce qu'on utilise au moins un solvant choisi parmi le dichloréthylène, le trichloréthylène et le tétrachloréthylène.

**26.** Procédé selon l'une quelconque des revendications précédentes caractérisé en ce qu'on utilise une quantité d'hydrophobant variant entre 0,1 % et 100 % en poids par rapport à l'oxyde, exprimé en matière sèche.

**27.** Procédé selon la revendication 4 caractérisé en ce qu'on utilise une amine à nombre d'atomes de carbone au plus égal à 4 et en ce que la mise en contact et le mélange de l'amine, du solvant et de la suspension ou du sol d'oxyde se fait à une température d'au moins 50 ° C, plus particulièrement d'au moins 80 ° C.

**28.** Procédé selon l'une quelconque des revendications 1 à 27 caractérisé en ce qu'on utilise une quantité de solvant telle que le rapport volume de solvant exprimé en litre/poids d'oxyde en kilogramme varie entre 0,1 et 5, de préférence 0,2 et 1,5.

**29.** Procédé selon l'une quelconque des revendications 1 à 28 caractérisé en ce qu'on mélange dans un premier temps la suspension ou le sol de l'oxyde précité avec le solvant et en ce qu'on introduit dans un deuxième temps l'hydrophobant dans le mélange ainsi obtenu.

**30.** Procédé selon l'une quelconque des revendications 1 à 28 caractérisé en ce qu'on mélange dans un premier temps la suspension ou le sol de l'oxyde précité avec l'hydrophobant et en ce qu'on introduit dans un deuxième temps le solvant dans le mélange ainsi obtenu.

**31.** Procédé selon l'une quelconque des revendications 1 à 28 caractérisé en ce qu'on mélange dans un premier temps le solvant et l'hydrophobant et en ce que dans un deuxième temps on met en présence le mélange ainsi obtenu avec la suspension ou le sol de l'oxyde précité.

**32.** Procédé selon l'une quelconque des revendications 1 à 31, caractérisé en ce qu'après séparation de la phase liquide on lave les granulés avec de l'eau ou de l'eau saturée en solvant précité.

**33.** Granulé à base d'oxyde métallique caractérisé en ce qu'il est poreux, qu'il possède un volume spécifique d'au moins 0,1 cm3/g, qu'il présente une taille moyenne d'au moins 50 $\mu$m, et en ce que l'oxyde métallique est choisi dans le groupe comprenant l'oxyde de titane, l'oxyde de zirconium, l'oxyde de cérium.

**34.** Granulé selon la revendication 33 caractérisé en ce qu'il présente une taille moyenne d'au moins 200 $\mu$m.

**35.** Granulé selon l'une des revendications 33 et 34 caractérisé en ce qu'il présente une forme sensiblement sphérique.

**36.** Granulé selon l'une des revendications 33 à 35 caractérisé en ce qu'il présente une taille moyenne d'au moins 0,5 mm, notamment comprise entre 0,5 et 20 mm et plus particulièrement entre 0,5 et 2 mm.

**37.** Granulé selon l'une des revendications 33 à 36 caractérisé en ce qu'il contient environ entre 0,1 et 30 % en poids d'hydrophobant.

**Claims**

**1.** Process for the preparation of granules based on an inorganic oxide of the titanium oxide, zirconium oxide or cerium oxide type, characterised in that it comprises the following stages:
- an aqueous suspension or an aqueous sol of the said oxide, at least one water-repelling agent and at least one organic solvent which is immiscible or nearly immiscible with water are brought into contact and mixed with stirring, whereby a liquid phase which is substantially free from the said oxide and granules based on the said oxide are obtained;
- the abovementioned liquid phase is separated from the granules;
- the said granules are optionally washed, dried and calcined.

**2.** Process according to claim 1, characterised in that a cationic or amphoteric water-repelling agent is used.

**3.** Process according to one of claims 1 and 2, characterised in that at least one water-repelling agent chosen from the group comprising primary, secondary or tertiary amines or their salts, quaternary

ammonium salts, or amino acids or their salts is used.

**4.** Process according to claim 3, characterised in that at least one water-repelling agent chosen from the group of amines with numbers of carbon atoms at most equal to 6 is used.

**5.** Process according to claim 3 or 4, characterised in that an aliphatic amine is used.

**6.** Process according to claim 3, characterised in that fatty amines are used.

**7.** Process according to claim 3 or 6, characterised in that the acetates are used as salts of primary, secondary or tertiary amines.

**8.** Process according to any one of claims 3 to 7, characterised in that a diamine is used as the water-repelling agent.

**9.** Process according to claim 8, characterised in that a diamine of formula $RNH-(CH_2)_3-NH_2$ is used, R being a $C_8$-$C_{22}$ radical.

**10.** Process according to claim 3, characterised in that a quaternary ammonium salt of formula (1)

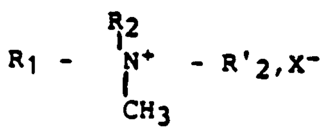

$R_1$ being an alkyl or alkenyl radical with a number of carbon atoms preferably equal to or greater than 6, $R_2$ and $R'_2$ being identical or different alkyl, alkyloxy or alkylphenyl radicals, X being an anion is used.

**11.** Process according to claim 3, characterised in that quaternary diammoniums of formula (2):

$R_3\ R_4\ R_5\ N^{+}\text{-}(CH_2)_n\text{-}N^{+}R_6 R_7 R_8\ 2X^{-}$

$R_3$ being an alkyl or alkenyl radical with a number of carbon atoms equal to or greater than 8;
$R_4$, $R_5$, $R_6$, $R_7$ and $R_8$ being hydrogen or alkyl radicals,
it being possible for $R_4$, $R_5$, $R_6$ or $R_7$ to be idential or different;
n being a number between 1 and 3;
X being an anion
are used.

**12.** Process according to claim 8, characterised in that the salts of diamines of formula (3):

$[R_3\ R_4\ R_5\ N\text{-}(CH_2)_n - NR_6\ R_7\ R_9]^{2+}(R_{10}\ COO)_2{}^{2-}$

$R_3$, $R_4$, $R_5$, $R_6$, $R_7$ and n being as defined above, $R_9$ being hydrogen or an alkyl radical, $R_{10}$ being an alkyl radical, with a number of carbon atoms equal to or greater than 8, are used.

**13.** Process according to claim 3, characterised in that the aminoacids or their salts of formula (4) or (5):

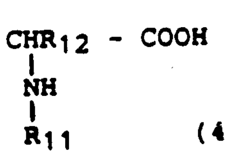

(4)

or

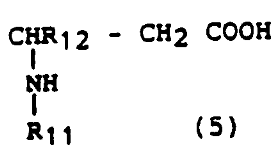

(5)

$R_{11}$ and $R_{12}$ being hydrogen or an alkyl radical, $R_{11}$ and $R_{12}$ not both being hydrogen are used.

**14.** Process according to one of claims 1 to 3, characterised in that compounds of formula (6):

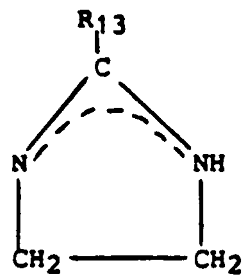

in which $R_{13}$ is a $C_8$-$C_{22}$ alkyl radical, or salts of derivatives of formula (7):

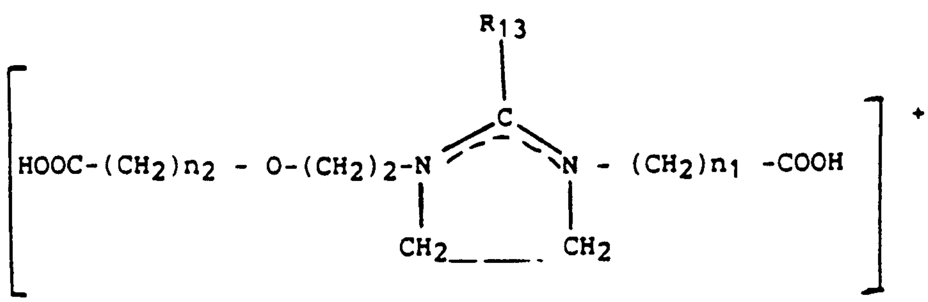

in which $n_1$ and $n_2$ are integers, which are identical or different and which can be between 1 and 4, are used as water-repelling agent.

**15.** Process according to any one of claims 1 to 3, characterised in that compounds of formula (8):

$(R_{14}\text{-}C_5H_4\text{-}NR_{15})^+ X^-$

X being a halogen, especially chlorine, $R_{14}$ being a radical corresponding to the carbon chain of a fatty acid and $R_{15}$ being an alkyl radical,
are used as water-repelling agent.

**16.** Process according to claim 1, characterised in that an anionic water-repelling agent is used.

**17.** Process according to claim 16, characterised in that a water-repelling agent chosen from the group comprising alkali metal soaps, alkali metal sulphonates, the beta-sulphoethyl esters of fatty acids, sulphates and sulphated products and the esters of orthophosphoric acid or one of its salts is used.

**18.** Process according to any one of claims 1 to 17, characterised in that a solvent chosen from the group comprising esters, ethers or ketones is used.

**19.** Process according to claim 18, characterised in that an acetic ester is used as solvent.

**20.** Process according to any one of claims 1 to 17, characterised in that a solvent chosen from the group of benzene hydrocarbons is used.

**21.** Process according to claim 20, characterised in that toluene or xylene is used as solvent.

**22.** Process according to any one of claims 1 to 17, characterised in that a solvent chosen from the group of halogenated aliphatic hydrocarbons or halogenated alicyclic hydrocarbons is used.

**23.** Process according to claim 22, characterised in that at least one solvent chosen from the group of halogenated ethylene hydrocarbons is used.

**24.** Process according to claim 21 or 22, characterised in that the abovementioned aliphatic hydrocarbons and alicyclic hydrocarbons are $C_1$-$C_4$ compounds.

**25.** Process according to claim 24, characterised in that at least one solvent chosen from dichloroethylene, trichloroethylene and tetrachloroethylene is used.

**26.** Process according to any one of the prceding claims, characterised in that a quantity of water-repelling agent varying between 0.1 % and 100 % by weight with respect to the oxide, expressed as solids, is used.

**27.** Process according to claim 4, characterised in that an amine with a number of carbon atoms at most equal to 4 is used and in that the amine, the solvent and the suspension or sol of oxide are brought into contact and mixed at a temperature of at least 50 ° C, more particularly of at least 80 ° C.

**28.** Process according to any one of claims 1 to 27, characterised in that a quantity of solvent is used such that the volume ratio of solvent, expressed in litre/weight of oxide in kilograms, varies between 0.1 and 5, preferably 0.2 and 1.5.

**29.** Process according to any one of claims 1 to 28, characterised in that, in a first step, the abovementioned suspension or sol of oxide is mixed with the solvent and in that, in a second step, the water-repelling agent is introduced into the mixture thus obtained.

**30.** Process according to any one of claims 1 to 28, characterised in that, in a first step, the abovementioned suspension or sol of oxide is mixed with the water-repelling agent and in that, in a second step, the solvent is introduced into the mixture thus obtained.

**31.** Process according to any one of claims 1 to 28, characterised in that, in a first step, the solvent and the water-repelling agent are mixed and in that, in a second step, the mixture thus obtained is brought into contact with the abovementioned suspension or sol of oxide.

**32.** Process according to any one of claims 1 to 31, characterised in that, after separation of the liquid phase, the granules are washed with water or with water saturated with an abovementioned solvent.

**33.** Granule based on metal oxide, characterised in that it is porous, in that it has a specific volume of at least 0.1 $cm^3/g$, in that it has a mean size of at least 50 $\mu m$, and in that the metal oxide is chosen from the group comprising titanium oxide, zirconium oxide or cerium oxide.

**34.** Granule according to claim 33, characterised in that it has a mean size of at least 200 $\mu m$.

**35.** Granule according to one of claims 33 and 34, characterised in that it has a substantially spherical shape.

**36.** Granule according to one of claims 33 to 35, characterised in that it has a mean size of at least 0.5 mm, especially of between 0.5 and 20 mm and, more particularly, between 0.5 and 2 mm.

**37.** Granule according to one of claims 33 to 36, characterised in that it contains approximately between 0.1 and 30 % by weight of water-repelling agent.

**Patentansprüche**

**1.** Verfahren zur Herstellung eines Granulats auf Basis eines mineralischen Oxids vom Typ Titanoxid, Zirkoniumoxid oder Ceroxid, dadurch gekennzeichnet, daß es die folgenden Stufen enthält:
- man mischt unter Rühren eine wäßrige Suspension oder eine wäßrige kolloidale Lösung des genannten Oxids mit wenigstens einem hydrophobierenden Mittel und wenigstens einem organischen mit Wasser wenig oder nicht mischbaren Lösungsmittel,

wodurch man eine flüssige Phase im wesentlichen ohne das Oxid und ein Granulat auf Basis des Oxids gewinnt;
- man trennt die vorgenannte flüssige Phase vom Granulat ab;
- gegebenenfalls wird das Granulat gewaschen, getrocknet und calciniert.

**2.** Verfahren nach Anspruch 1, dadurch gekennzeichnet, daß man ein kationisches oder amphoteres hydrophobierendes Mittel verwendet.

**3.** Verfahren nach Anspruch 1 oder 2, dadurch gekennzeichnet, daß man wenigstens ein hydrophobierendes Mittel verwendet, das aus der Gruppe der primären, sekundären, tertiären Amine oder deren Salzen, quaternärer Ammoniumsalze, Aminosäuren oder deren Salzen ausgewählt ist.

**4.** Verfahren nach Anspruch 3, dadurch gekennzeichnet, daß man wenigstens ein hydrophobierendes Mittel verwendet, das aus der Gruppe von Aminen, in denen die Anzahl der Kohlenstoffatomen maximal 6 beträgt ausgewählt ist.

**5.** Verfahren nach Anspruch 3 oder 4, dadurch gekennzeichnet, daß man aliphatische Amine verwendet.

**6.** Verfahren nach Anspruch 3, dadurch gekennzeichnet, daß man Fettamine verwendet.

**7.** Verfahren nach Anspruch 3 oder 6, dadurch gekennzeichnet, daß man die Acetate als primäre , sekundäre und tertiäre Aminsalze verwendet.

**8.** Verfahren nach einem der Ansprüche 3 bis 7, dadurch gekennzeichnet, daß man ein Diamin als hydrophobierendes Mittel verwendet.

**9.** Verfahren nach Anspruch 8, dadurch gekennzeichnet, daß man ein Diamin der Formel RNH - $(CH_2)_3$ - $NH_2$ verwendet, worin R ein Rest von $C_8$-$C_{22}$ sein kann.

**10.** Verfahren nach Anspruch 3, dadurch gekennzeichnet, daß man ein quaternäres Ammoniumsalz der Formel (1)

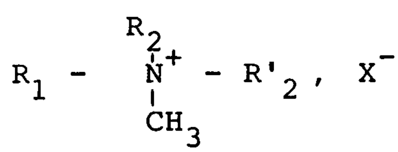

verwendet, worin $R_1$ ein Alkyl- oder Alkenylrest ist, vorzugsweise mit einer Kohlenstoffzahl gleich oder größer als 6, $R_2$ und $R'_2$ sind Alkyl-, Alkoxy- oder Alkylphenylreste, die gleich oder verschieden sind, X ist ein Anion.

**11.** Verfahren nach Anspruch 3, dadurch gekennzeichnet, daß man quaternäre Diammonium der Formel (2):

$R_3\ R_4\ R_5\ N^+ - (CH_2)_n - N^+ R_6 R_7 R_8,\ 2X^-$

verwendet, worin
$R_3$ ein Alkyl- oder Alkenylrest mit einer Kohlenstoffzahl gleich oder größer als 8 ist;
$R_4$ $R_5$ $R_6$ $R_7$ $R_8$ entweder Wasserstoff oder Alkylreste sind;
$R_4$ $R_5$ $R_6$ oder $R_7$ gleich oder verschieden sein können;
n eine Zahl zwischen 1 und 3 ist
X ist ein Anion.

**12.** Verfahren nach Anspruch 8, dadurch gekennzeichnet, daß man Diaminsalze der Formel (3):

$[R_3\ R_4\ R_5\ N-(CH_2)_n - NR_6\ R_7\ R_9]^{2+}\ (R_{10}\ COO)_2{}^{2-}$

$R_3$, $R_4$, $R_5$, $R_6$, $R_7$ und n sind, wie im vorhergehenden Anspruch (11) definiert, $R_9$ kann Wasserstoff oder ein Alkylrest sein, $R_{10}$ ist ein Alkylrest mit einer Kohlenstoffzahl gleich oder größer als 8.

**13.** Verfahren nach Anspruch 3, dadurch gekennzeichnet. daß man Aminosäuren oder deren Salze der Formel (4) oder (5) verwendet :

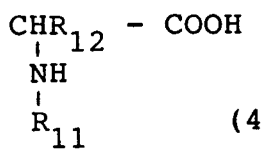
(4) oder

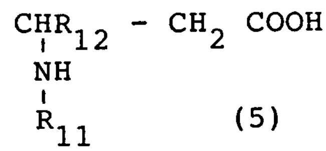
(5)

$R_{11}$, $R_{12}$ können Wasserstoff oder ein Alkylrest sein,
$R_{11}$ und $R_{12}$ können nicht gleichzeitig Wasserstoff sein.

**14.** Verfahren nach einem der Ansprüche 1 bis 3, dadurch gekennzeichnet, daß man als hydrophobierendes Mittel Verbindungen der Formel (6) verwendet:

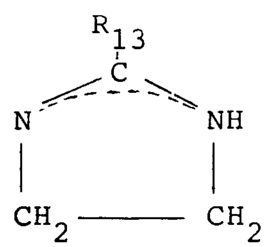

worin $R_{13}$ ein Alkylrest von $C_8$ bis $C_{22}$ ist oder die Salze der Derivate der Formel (7) ist:

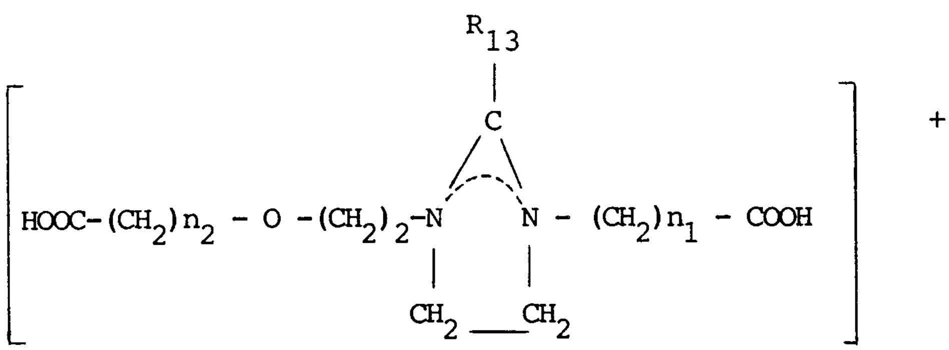

worin $n_1$ und $n_2$ ganze Zahlen sind, die gleich oder verschieden sind und im Bereich von 1 bis 4 liegen.

**15.** Verfahren nach einem der Ansprüche 1 bis 3, dadurch gekennzeichnet, daß man als hydrophobierendes Mittel Verbindungen der Formel (8) verwendet:

$(R_{14} - C_5H_4 - NR_{15})^+ X^-$
X ist ein Halogen, insbesondere Chlor, $R_{14}$ ist ein Rest, der der kohlenstoffhaltigen Kette einer Fettsäure entspricht, $R_{15}$ ist ein Alkylrest.

**16.** Verfahren nach Anspruch 1, dadurch gekennzeichnet, daß man ein anionisches hydrophobierendes Mittel verwendet.

**17.** Verfahren nach Anspruch 16, dadurch gekennzeichnet, daß man ein hydrophobierendes Mittel verwendet, das aus der Gruppe der Alkalimetallseifen, Alkalisulfonaten, Betasulfoethylestern von Fettsäuren, Sulfate und sulfatierte Produkte , Ester der Orthophosphorsäure oder deren Salze ausgewählt wird.

**18.** Verfahren nach einem der Ansprüche 1 bis 17, dadurch gekennzeichnet, daß man ein Lösungsmittel verwendet, das aus der Gruppe der Ester, Ether und Ketone ausgewählt wird.

**19.** Verfahren nach Anspruch 18, dadurch gekennzeichnet, daß man als Lösungsmittel einen Essigsäureester verwendet.

**20.** Verfahren nach einem der Ansprüche 1 bis 17, dadurch gekennzeichnet, daß man ein Lösungsmittel verwendet, das aus der Gruppe der Benzolkohlenwasserstoffe ausgewählt wird.

**21.** Verfahren nach Anspruch 20, dadurch gekennzeichnet, daß man als Lösungsmittel Toluol oder Xylol verwendet.

**22.** Verfahren nach einem der Ansprüche 1 bis 17, dadurch gekennzeichnet, daß man ein Lösungsmittel verwendet, das aus der Gruppe der halogenierten, aliphatischen Kohlenwasserstoffe oder der halogenierten alicyclischen Kohlenwasserstoffe ausgewählt wird.

**23.** Verfahren nach Anspruch 22, dadurch gekennzeichnet, daß man wenigstens ein Lösungsmittel verwendet, das aus der Gruppe der halogenierten ethylenischen Kohlenstoffe ausgewählt wird.

**24.** Verfahren nach Anspruch 21 oder 22, dadurch gekennzeichnet, daß die aliphatischen Kohlenwasserstoffe und die vorgenannten alicyclischen Kohlenwasserstoffe zwischen $C_1$ und $C_4$ sind.

**25.** Verfahren nach Anspruch 24, dadurch gekennzeichnet, daß man wenigstens ein Lösungsmittel verwendet, das aus Dichlorethylen, Trichlorethylen und Tetrachlorethylen ausgewählt wird.

**26.** Verfahren nach einem der vorhergehenden Ansprüche, dadurch gekennzeichnet, daß die Menge des zu verwendenden hydrophobierenden Mittels zwischen 0,1 Gew.% und 100 Gew.% variiert, bezogen auf das Oxid, ausgedrückt durch die Trockensubstanz.

**27.** Verfahren nach Anspruch 4, dadurch gekennzeichnet, daß man ein Amin mit höchstens 4 Kohlenstoffatomen verwendet und daß das In-Berührung-Bringen und Mischen des Amins, des Lösungsmittels und der Suspension oder der kolloidalen Lösung des Oxids bei einer Temperatur von mindestens 50 ° C, vorzugsweise mindestens 80 ° C erfolgt.

**28.** Verfahren nach einem der Ansprüche 1 bis 27, dadurch gekennzeichnet, daß man eine Menge des Lösungsmittels verwendet, bei der das Mengenverhältnis des Lösungsmittels ausgedrückt durch Liter/Gewicht des Oxids in Kilogramm zwischen 0,1 und 5, vorzugsweise zwischen 0,2 und 1,5 liegt.

**29.** Verfahren nach einem der Ansprüche 1 bis 28, dadurch gekennzeichnet, daß man in einer ersten Stufe die Suspension oder die vorgenannte kolloidale Lösung mit dem Lösungsmittel mischt und daß man in einer zweiten Stufe das hydrophobierende Mittel in das so erhaltene Gemisch einführt.

**30.** Verfahren nach einem der Ansprüche 1 bis 28, dadurch gekennzeichnet, daß man in einer ersten Stufe die Suspension oder die vorgenannte kolloidale Lösung mit dem hydrophobierenden Mittel mischt und daß man in einer zweiten Stufe das Lösungsmittel in das so erhaltene Gemisch einführt.

**31.** Verfahren nach einem der Ansprüche 1 bis 28, dadurch gekennzeichnet, daß man in einer ersten Stufe das Lösungsmittel und das hydrophobierende Mittel mischt und daß man in einer zweiten Stufe das so erhaltene Gemisch mit der Suspension oder der vorgenannten kolloidalen Lösung in Kontakt bringt.

**32.** Verfahren nach einem der Ansprüche 1 bis 31, dadurch gekennzeichnet, daß man nach der Trennung der flüssigen Phase das Granulat mit Wasser oder mit vom vorgenannten Lösungsmittel gesättigtem Wasser wäscht.

**33.** Granulat auf der Basis von Metalloxid, dadurch gekennzeichnet, daß es porös ist, ein spezifisches Volumen von wenigstens 0,1 $cm^3/g$ und eine mittlere Größe von wenigstens 50 µm besitzt und daß das Metalloxid aus der Gruppe von Titanoxid, Zirkoniumoxid und Ceroxid ausgewählt wird.

**34.** Granulat nach Anspruch 33, dadurch gekennzeichnet, daß es eine mittlere Größe von wenigstens 200 µm hat.

**35.** Granulat nach einem der Ansprüche 33 und 34, dadurch gekennzeichnet, daß es eine etwa kugelförmige Form hat.

**36.** Granulat nach einem der Ansprüche 33 bis 35, dadurch gekennzeichnet, daß es eine mittlere Größe von wenigstens 0,5 mm, insbesondere zwischen 0,5 und 20 mm und vorzugsweise zwischen 0,5 und 2 mm hat.

**37.** Granulat nach einem der Ansprüche 33 bis 36, dadurch gekennzeichnet, daß es ungefähr zwischen 0,1 und 30 Gew.% eines hydrophobierenden Mittels enthält.